# EUROPÄISCHE PATENTSCHRIFT

(11) **EP 0 315 955 B1**
(45) Veröffentlichungstag und Bekanntmachung des Hinweises auf die Patenterteilung: **26.01.1994**
(21) Anmeldenummer: 88118583.9
(22) Anmeldetag: 08.11.1988
(51) Int. Cl.: B60R 22/40, B60R 22/26

(54) **Beschleunigungssensor für fahrzeugsensitive Systeme**
Acceleration sensor for vehicle-sensitive systems
Capteur d'accélération pour systèmes sensibles aux mouvements d'un véhicule

(30) Priorität: 10.11.1987 DE 3738200
(43) Veröffentlichungstag der Anmeldung: 17.05.1989
(73) Patentinhaber: AUTOLIV DEVELOPMENT AKTIEBOLAG, 447 83 Vargarda (SE)
(72) Erfinder: Tauber, Erhard, D-8000 München 50 (DE)
(74) Vertreter: Gossel, Hans K., Dipl.-Ing.

(56) Entgegenhaltungen:
- EP-A- 0 351 551
- DE-U- 8 503 541
- FR-A- 2 293 224
- FR-A- 2 295 764
- GB-A- 2 118 429
- US-A- 4 063 695

## Beschreibung

Die Erfindung betrifft einen Beschleunigungssensor für fahrzeugsensitive Systeme nach dem ersten Teil des Anspruchs 1.

Ein mit einem Gurtaufroller verbundener Beschleunigungssensor ist beispielsweise aus der DE-A-3 418 378 bekannt. Eine einwandfreie Funktion eines derartigen Beschleunigungssensors ist nur gewährleistet, wenn sich die Basisplatte des Halteteils der Kugel in ihrer waagerechten oder im wesentlichen waagerechten Stellung befindet. Der Beschleunigungssensor ist üblicherweise so eingestellt, daß er auf Beschleunigungen von mehr als 0,5 g anspricht. Gerät jedoch die Basisplatte des Halteteils des Beschleunigungssensors in eine Schräglage, wird die Kugel aus ihrer Ruhestellung gedrängt, so daß der Impulshebel die Steuerklinke betätigt und in die Verzahnung des Steuerrades einfallen läßt, was dann eine Blockierung des Gurtaufrollers zur Folge hat.

Ist der Beschleunigungssensor mit einem fahrzeugfesten Teil verbunden, das seine Stellung relativ zu dem Fahrzeug nicht ändert, behält die Basisplatte des Halteteils ständig ihre vorgegebene waagerechte Grundstellung ein. Wird beispielsweise der Gurtaufroller in der Rückenlehne eines Fahrzeugsitzes angeordnet, ist der Beschleunigungssensor nach einer Sitzlehnenverstellung nur dann noch funktionsfähig, wenn die Basisplatte seines Halteteils wieder in ihre waagerechte Stellung gebracht worden ist

Aus der DE-A-2 658 747 ist ein Sicherheitsgurtsystem bekannt, das in einen Sitz oder eine Sitzlehne eines Kraftfahrzeuges integriert ist und das sich nach einer Sitz- oder Sitzlehnenverstellung dadurch an die neue Lage anpassen läßt, daß der Gurtaufroller mit Beschleunigungssensor auf einer schwenkbaren Tragplatte angeordnet ist, die durch aus Hebeln und Gestängen und/oder Bowdenzügen bestehende Getriebeeinrichtungen in eine Stellung verschwenkbar ist, in der die Hochachse der fahrzeugsensitiven Blockiervorrichtung in Richtung der Erdbeschleunigung gehalten ist. Dieses bekannte Sicherheitsgurtsystem läßt sich jedoch nur mit großem Aufwand praktisch verwirklichen, weil umfangreiche Stell- und Getriebeeinrichtungen vorgesehen werden müssen, die nach jeder Sitz- oder Sitzlehnenverstellung den Gurtaufroller mit Beschleunigungssensor verstellen und diesen in jeder verstellten Position derart fixieren, daß er die Gurtkräfte aufzunehmen vermag.

Ein gattungsgemäßer Beschleunigungssensor ist beispielsweise aus der DE-U-8 503 541 bekannt. Bei einem derartigen Beschleunigungssensor wird die Verschwenkung durch einen Seilzug erreicht. Diese Verschwenkung läßt sich jedoch nicht hinreichend genau durchführen. Darüber hinaus ist der Lagerzapfen der Trägerplatte von dem Arm, der bei diesem vorbekannten Beschleunigungssensor als Impulshilfe dient, beabstandet, so daß je nach Verschwenkwinkel der Trägerplatte die Spitze des Arms verschieden weit von den Steuerzähnen der Steuerscheibe entfernt ist. Hierdurch bedingt ist die Funktionsfähigkeit des vorbekannten Beschleunigungssensors von dem Verschwenkwinkel des Trägerteils abhängig.

Aufgabe der vorliegenden Erfindung ist es ausgehend von dem zuletzt genannten Stand der Technik, einen Beschleunigungssensor mit den Merkmalen des ersten Teils des Anspruchs 1 zu schaffen, der eine hochgenaue Sensorverstellung in einfacher Art und Weise gewährleistet, wobei eine Funktionsfähigkeit unabhängig von der Größe des Verschwenkwinkels des Halteteils des Beschleunigungssensors gegeben sein soll.

Erfindungsgemäß wird diese Aufgabe bei einem gattungsgemäßen Beschleunigungssensor durch die kennzeichnenden Merkmale des Anspruchs 1 gelöst. Demnach verläuft die Achse durch den Bereich der Spitze des Impulshebels oder den Berührungsbereich der Spitze des Impulshebels mit dem Betätigungsglied. Die Stelleinrichtung besteht aus einem Gewindespindel-Mutter-Antrieb oder einem Schnecken-Schneckenrad-Antrieb. Schließlich ist von einem mit einem Antriebsmotor für das verschwenkbare Fahrzeugteil verbundenen Getriebe die Drehbewegung für die Verschwenkung des Beschleunigungssensors über eine biegsame Welle übertragbar.

Bei dem erfindungsgemäßen Beschleunigungssensor verläuft die Schwenkachse des Halteteils durch den Berührungsbereich der Spitze des Impulshebels mit dem Betätigungsglied, so daß die relative Zuordnung dieser beiden Teile bei jeder Verschwenkung erhalten bleibt. Nach einer Verschwenkung des Beschleunigungssensors muß daher lediglich das Halteteil eine kompensierende Schwenkbewegung in der Weise ausführen, daß sich dessen Basisplatte wieder in ihrer waagerechten Stellung befindet. Durch diese kompensierende Verschwenkung ändert sich die relative Lage der Spitze des Impulshebels zu dem Betätigungsglied nicht. Erfindungsgemäß wird nur der Beschleunigungssensor nach einer Verschwenkung des verschwenkbaren Fahrzeugteils auf die neue Stellung eingestellt, ohne daß auch eine Verstellung des Gurtaufrollers insgesamt vorgenommen wird, so daß dessen Stabilität durch den Verstellvorgang nicht beeinträchtigt wird und eine einfache Einstellung bei hoher Funktionssicherheit gewährleistet ist.

Weitere bevorzugte Ausgestaltungen der Erfindung sind in den sich an den Hauptanspruch anschließenden Unteransprüchen beschrieben.

Ausführungsbeispiele der Erfindung werden nachstehend anhand der Zeichnung näher erläutert. In dieser zeigt
- Fig.1: eine Seitenansicht eines Gurtaufrollers mit verschwenkbarem fahrzeugsensitiven Beschleunigungssensor,
- Fig.2: eine Seitenansicht des Gurtaufrollers nach Fig.1,
- Fig.3: eine Seitenansicht einer zweiten Ausführungsform eines Gurtaufrollers mit einer aus einer Spindel und einem Gabelstück bestehenden Stelleinrichtung für den Beschleunigungssensor und
- Fig.4: eine Seitenansicht einer dritten Ausführungsform eines Beschleunigungssensors, bei der der Beschleunigungssensor durch einen Schneckentrieb verschwenkbar ist.

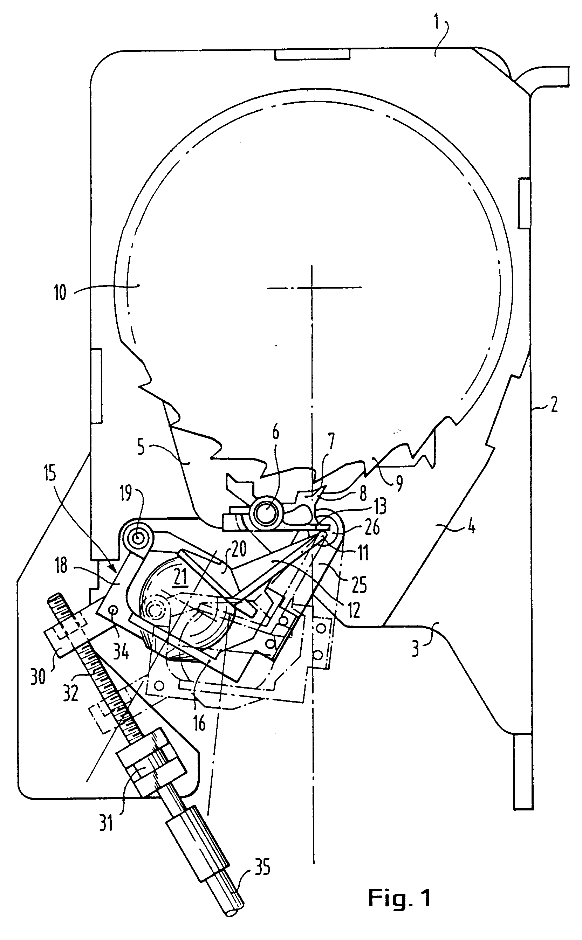

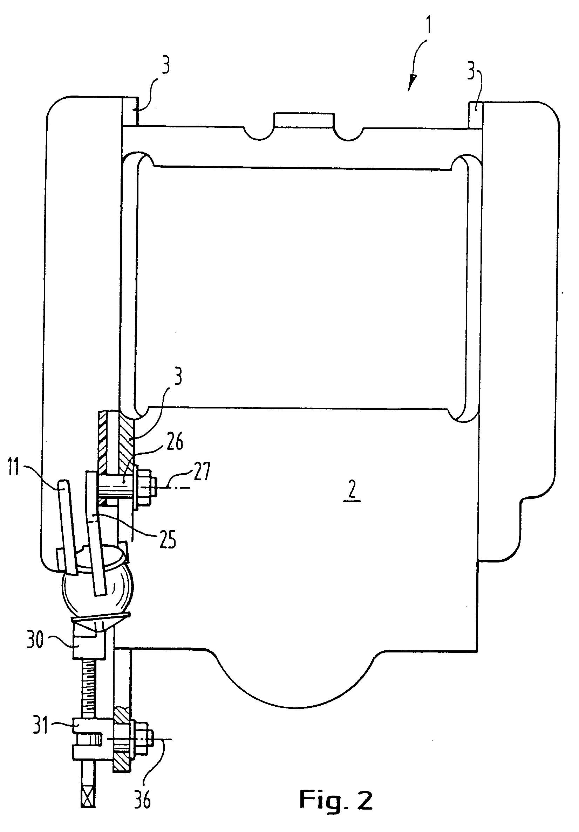

Der in den Fig.1 und 2 dargestellte Gurtaufroller weist einen U-förmigen Grundrahmen 1 mit dem zentralen Stegteil 2 und seitlichen zueinander parallelen Schenkeln 3 auf. Über diesen Rahmen ist der Gurtaufroller beispielsweise an einer verschwenkbaren Rückenlehne befestigt. In dem Rahmen 1 ist über besondere Lagerteile die Wickelrolle gelagert. Mit einem Schenkel 2 des Rahmens ist die Mechanikgrundplatte 4 aus Kunststoff verbunden. An der Mechanikgrundplatte 4 ist eine Steuerscheibe 5 schwenkbar gelagert. Um einen Zapfen 6 der Steuerscheibe 5 ist der zweiarmige Klinkenhebel oder Steuerklinke 7 schwenkbar gelagert, dessen Sperrzahn 8 in die Verzahnung 9 des Steuerrades 10 einfällt, wenn die Spitze 11 des Impulshebels 12 durch Verschwenkung auf dem Betätigungsteil 13 der Steuerklinke 7 gleitet und diese dadurch in die Verzahnung 9 einschwenkt. Das Steuerrad 10 ist mit der Welle der Wickelrolle verbunden.

Der sogenannte fahrzeugsensitive Beschleunigungssensor 15 besteht aus einer Basisplatte 16 mit kugelpfannenförmiger Vertiefung und dem Impulshebel 12, der an dem mit der Basisplatte 16 verbundenen Lagerteil 18 um die Achse 19 schwenkbar gelagert ist. Der Impulshebel 12 weist zwischen seiner Lagerung und seiner Spitze 11 eine kugelpfannenförmige Kappe 20 auf, wobei zwischen dieser Kappe und der Vertiefung der Basisplatte 16 die Sensorkugel 21 gehaltert ist.

Soweit entspricht der Gurtaufroller und der fahrzeugsensitive Beschleunigungssensor 15 der in der DE-A-3 418 378 beschriebenen Vorrichtung, auf die daher zur weiteren Beschreibung Bezug genommen wird.

Die Abänderung gegenüber dem bekannten Gurtaufroller besteht in folgendem:
Die Basisplatte 16 ist mit einem Halteteil 25 fest verbunden, das an seinem oberen freien Ende mit einem Achszapfen 26 versehen ist, der in dem Schenkel 3 des Rahmens 1 schwenkbar gelagert ist. Die Schwenkachse 27 des Tragstücks 25 verläuft dabei durch den Berührungspunkt der Spitze 11 des Impulshebels mit dem Betätigungsteil 13 der Steuerklinke 7.

An seinem dem Achszapfen 26 gegenüberliegenden Ende ist die Basisplatte 16 oder das Halteteil 25 gelenkig mit einer Spindelmutter 30 verbunden, in die die Spindel 32 eingeschraubt ist. Die Spindel 32 ist frei drehbar aber axial unverschieblich in dem Lagerstück 31 gelagert, das um eine Schwenkachse 36, die senkrecht zu der Spindel 32 steht, drehbar an einem Fortsatz des Schenkels 3 gelagert ist. Die Spindelmutter 30 ist durch den Achszapfen 34 gelenkig mit dem Halteteil 25 oder der Basisplatte 16 verbunden. Durch die gelenkige Verbindung der Spindelmutter 30 und die drehbare Lagerung des Lagerstücks 31 führen die Spindelmutter und das Lagerstück 31 bei einer Verdrehung der Spindel 32 relativ zueinander eine geradlinige Bewegung aus, so daß die kreisbogenförmige Bewegung des Achszapfens 34 bei einer Verschwenkung des Beschleunigungssensors ausgeglichen wird.

Die Spindel 32 ist an ihrem unteren Ende mit einer flexiblen Welle 35 verbunden. Durch Drehen der Welle 35 wird daher die Spindel 32 gedreht und die Basisplatte 16 um die Achse 27 des Achszapfens 26 verschwenkt.

Der Gurtaufroller oder Gurtautomat ist in eine verschwenkbare Sitzlehne eingebaut. Die Sitzlehnenverstellung erfolgt daher über einen Servomotor mit dazugehörigem Getriebe.

Zwischen dem Antriebsmotor und dem Sitzlehnenverstellgetriebe ist ein Getriebe geschaltet, über das der Antrieb der Antriebswelle 35, die biegsam ausgestaltet ist, abgeleitet wird. Die Ableitung kann durch ein Schnecken- oder Schneckenradgetriebe, oder aber auch durch ein Ritzel-Stirnradgetriebe oder ein Kegelradgetriebe erfolgen.

Die Drehzahl des Servomotors wird von der Welle 35 im vorgegebenen Verhältnis zu der Sitzlehnenverstellung auf die Spindel 32 übertragen, so daß je nach der Sitzlehnenverstellung immer eine entsprechende Nachstellung der Basisplatte 16 erfolgt, die dadurch in ihrer waagerechten Grundstellung unabhängig von einer Verstellung der Sitzlehne gehalten wird.

Wie bereits beschrieben, verläuft die Schwenkachse des Beschleunigungssensors durch die Spitze des Impulshebels, so daß dessen Angriffspunkt relativ zu dem Betätigungsglied unverändert bleibt.

Die Verstelleinrichtung des Sensors ist ein GewindesspindelMutter-Antrieb. Je nach Drehrichtung der biegsamen Welle 35 und somit der Verstellrichtung des Sitzes wird der Sensor nach oben oder unten verschwenkt und somit sein Einbauwinkel synchron zur Lehnenverstellung verändert.

Die Spindelmuttern sind auf der entgegengesetzten Seite der Sensorlagerung angebracht.

Um die kreisbogenförmige Bewegung des Beschleunigungssensors in eine gerade Bewegung der Spindelmutter auf der Spindel umzuwandeln, ist die Spindelmutter 30 unmittelbar oder über einen Hebel schwenkbar über den Achszapfen 34 mit der Basisplatte 16 verbunden. Die Spindelmutter 30 oder ein diese halternder Hebel und das Lagerstück 31 sind durch die schwenkbaren Lagerungen beider Teile parallel zueinander gehalten.

Die vorstehend beschriebene Ausgestaltung ermöglicht eine automatische Verstellung des Beschleunigungssensors entsprechend einer Sitzlehnenverstellung. Die Anordnung ist billig und platzsparend, wobei insbesondere durch den Spindelantrieb eine genaue Sensorverstellung gewährleistet ist.

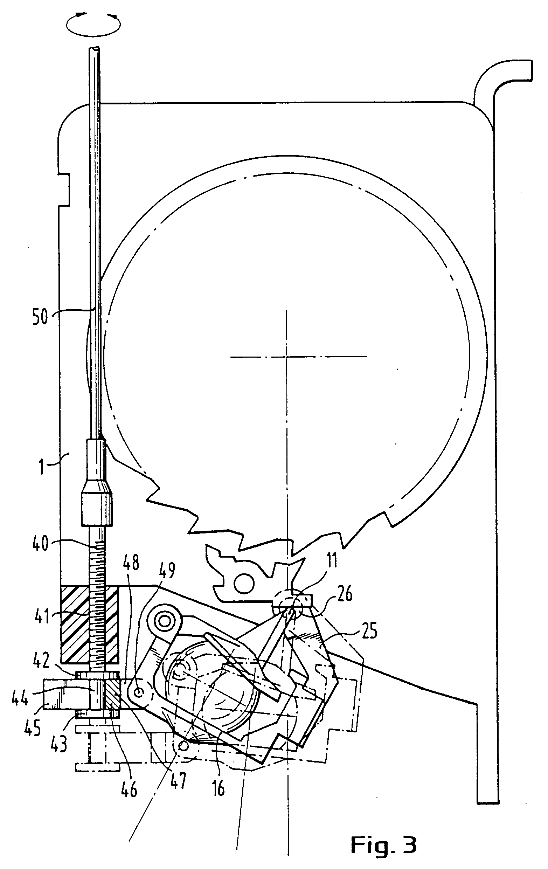

Bei dem Ausführungsbeispiel nach Fig.3 ist die Spindel 40 in ein Gewinde 41 eingeschraubt, das mit dem Grundrahmen 1 fest verbunden ist. An ihrem das Gewinde 41 durchsetzenden Ende trägt die Spindel 40 im Abstand voneinander zwei ringförmige Scheiben 42,43, die zwischen sich einen gewindefreien Schaft 44 aufweisen. Diesen gewindefreien Schaft 44 fassen zwei Schenkel 45 eines gabelförmigen Teils 46 zwischen sich ein. Die Schenkel 45 weisen rechteckige Querschnitte auf, so daß die oberen und unteren Seiten der Schenkel 45 Gleitflächen bilden, die zwischen den einander zugewandten Flanken der Scheiben 42,43, die Führungen für die Schenkel 45 des gabelförmigen Teils 46 bilden, querverschieblich geführt sind. Das Stegteil 47 des gabelförmigen Teils ist mit einem Fortsatz 48 versehen, das durch den Achszapfen 49 in der dargestellten Weise schwenkbar mit dem Basisteil 16 verbunden ist. Durch Verdrehen der Spindel 40 durch die Welle 50 wird das gabelförmige Teil 46 parallel zu sich selbst verstellt. Durch diese Stellbewegung wird das Basisteil 16 des Beschleunigungssensor verschwenkt, wobei die kreisbogenförmige Schwenkbewegung des Achszapfens 49 dadurch ausgeglichen wird, daß die Schenkel 45 des gabelförmigen Teils 46 querverschieblich zwischen den Scheiben 42,43 gehalten sind. In Fig.3 ist das gabelförmige Teil 46 in vollen Linien in einer oberen Stellung und in gestrichelten Linien in einer unteren Stellung dargestellt. Das Halteteil 25 ist wiederum um den Achszapfen 26 schwenkbar, dessen Mittelachse durch den Bereich der Spitze 11 des Impulshebels 12 verläuft.

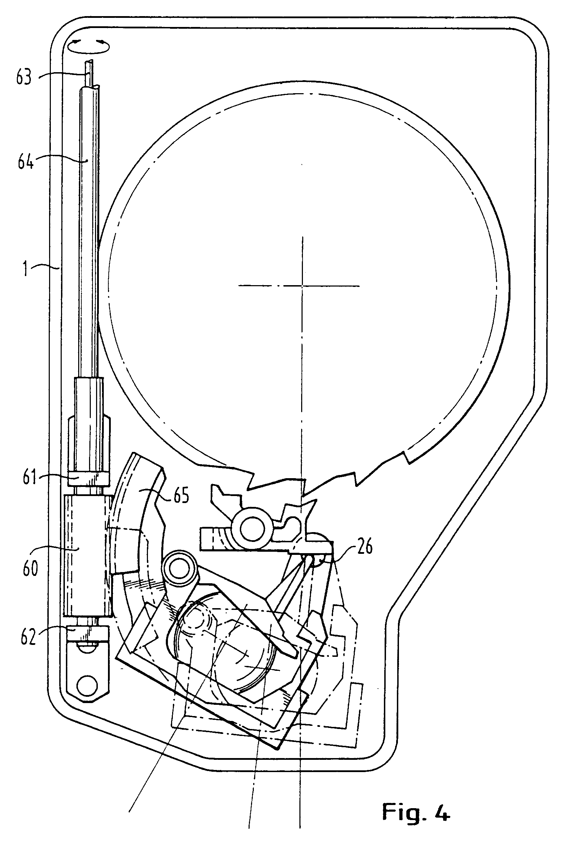

Bei dem Ausführungsbeispiel nach Fig.4 ist in dem Grundrahmen 1 eine Schnecke 60 in Lagerstücken 61,62 drehbar gelagert. Der Drehantrieb der Schnecke 60 besteht wiederum aus einer flexiblen Welle 63, die in einem Schlauch 64 angeordnet ist, der aus gewendeltem Draht mit einer Schutzhülle bestehen kann. Die Schnecke 60 kämmt mit einem Schneckenradsgement 65, das mit dem Halteteil 25 verbunden ist. Die ideelle Mittelachse des Schneckenradsegments 65 fällt mit der Mittelachse 27 des Achszapfens 26 zusammen, so daß der Beschleunigungssensor durch Drehen der Schnecke 60 um den Achszapfen 26 verschwenkt wird.

## Patentansprüche

1. Beschleunigungssensor für fahrzeugsensitive Systeme, der an einem mit dem Fahrzeug verbundenen Teil angeordnet ist, bestehend aus einem Halteteil (25) mit einer Basisplatte (16), die eine kugelpfannenförmige Ausnehmung und ein Lagerteil für einen Impulshebel (12) aufweist, wobei der Impulshebel (12) zwischen seiner Spitze (11) und seiner Lagerung an seinem Lagerteil zu einer kugelpfannenförmigen Kappe (20) verbreitert ist und zwischen dieser und der pfannenförmigen Ausnehmung eine eine Trägheitsmasse bildende Kugel (21) angeordnet ist, und mit einem mit der Spitze (11) des Impulshebels (12) in Berührung stehenden oder nahezu in Berührung stehenden Betätigungsglied (13), wobei das Halteteil (25) an einem verschwenkbaren Fahrzeugteil um eine Achse (27) schwenkbar gelagert ist und wobei das Halteteil (25) mit einer Stelleinrichtung versehen ist, die dieses bei Verschwenken des Fahrzeugteils derart verschwenkt, daß die Basisplatte (16) in ihrer im wesentlichen waagerechten Stellung verbleibt,
**dadurch gekennzeichnet**,
daß die Achse (27) durch den Bereich der Spitze (11) des Impulshebels (12) oder durch den Berührungsbereich der Spitze des Impulshebels mit dem Betätigungsglied (13) verläuft,
daß die Stelleinrichtung aus einem Gewindespindel-Mutter-Antrieb (30, 32; 40, 41) oder einem Schnecken-Schneckenrad-Antrieb (60, 65) besteht, mit dem eine biegsame Welle (35; 50; 63) verbunden ist,
und daß von einem mit einem Antriebsmotor für das verschwenkbare Fahrzeugteil verbundenen Getriebe die Drehbewegung für die Verschwenkung über die biegsame Welle (35; 50; 63) übertragbar ist.

2. Beschleunigungssensor nach Anspruch 1, dadurch gekennzeichnet, daß die Achse durch die Momentanachse eines Universalgelenks gebildet ist.

3. Beschleunigungssensor nach Anspruch 1 oder 2 für einen Gurtaufroller, dadurch gekennzeichnet, daß ein Achszapfen (26), der die Schwenkachse (27) bildet, an einem Rahmenschenkel (3) des U-förmigen Rahmens (1) des Gurtaufrollers befestigt ist.

4. Beschleunigungssensor nach einem der Ansprüche 1-3, dadurch gekennzeichnet, daß die Spindelmutter (30) gelenkig mit dem Halteteil (25) oder der Basisplatte (16) verbunden und die Spindel (32) drehbar, aber axial unverschieblich in einem Lagerstück (31) gelagert ist, das seinerseits drehbar unmittelbar oder mittelbar an dem verschwenkbaren Fahrzeugteil gelagert ist, und daß die Schwenkachsen der Spindelmutter (30) des Halteteils (25) oder der Basisplatte (16) und des Lagerstücks (31) zueinander parallel sind.

5. Beschleunigungssensor nach einem der Ansprüche 1-3, dadurch gekennzeichnet, daß eine Spindel (40) in eine Mutter oder ein Gewinde eingeschraubt ist, die oder das fest unmittelbar oder mittelbar mit dem verschwenkbaren Fahrzeugteil verbunden ist, und daß die Spindel (40) an ihrem freien Ende auf ihrem Schaft im Abstand voneinander mit zwei Haltescheiben (42, 43) versehen ist, die zwischen sich die den Schaft (44) einfassenden Schenkel (45) eines Gabelstucks (46) aufnehmen, das an dem Halteteil (25) um eine zu der Schwenkachse (27) parallele Achse (49) schwenkbar gelagert ist.

6. Beschleunigungssensor nach einem der Ansprüche 1-3, dadurch gekennzeichnet, daß die Schnecke (60) unmittelbar oder mittelbar an dem verschwenkbaren Fahrzeugteil gelagert ist, so daß sie mit einem Schneckenradsegment (65) kämmt, das mit dem Halteteil (25) fest verbunden ist und dessen Mittelachse mit der Schwenkachse (27) des Halteteils (25) zusammenfällt.

## Claims

1. Acceleration sensor for vehicle-sensitive systems which is located on a component connected to the vehicle, comprising a bracket section (25) with a base plate (16) which has a ball-cup-shaped recess and a bearing section for a pulse lever (12), where the pulse lever (12) is widened between its tip (11) and its mounting at its bearing section to form a ball-cup-shaped cap (20), and between this and the cup-shaped recess is located a ball (21) which forms an inertia mass, and with an actuating mechanism (13) which is in contact or almost in contact with the tip (11) of the pulse lever (12), where the bracket section (25) is swivel-mounted about an axis (27) on a pivotable vehicle component and where the bracket section (25) is provided with an adjustment device which, when the vehicle component is pivoted, pivots said section such that the base plate (16) remains in its essentially horizontal position,
**characterised therein**
that the axis (27) passes through the area of the tip (11) of the pulse lever (12) or through the contact area of the pulse lever tip with the actuator mechanism (13),
that the adjustment device consists of a threaded spindle/nut drive (30, 32; 40, 41) or a worm/worm wheel drive (60, 65) which is connected to a flexible shaft (35; 50; 63),
and that the rotary motion for the pivoting action can be transmitted by a gearbox connected to a drive motor for the pivotable vehicle component via the flexible shaft (35; 50; 63).

2. Acceleration sensor as claimed in Claim 1, characterised therein that the shaft is formed by the moment-transmitting shaft of a universal joint.

3. Acceleration sensor as claimed in Claim 1 or 2 for a belt take-up device, characterised therein that a journal (26) which forms the pivot (27) is attached to a frame arm (3) of the U-shaped frame (1) of the belt take-up device.

4. Acceleration sensor as claimed in any one of Claims 1-3, characterised therein that the spindle nut (30) is connected with the bracket section (25) or the base plate (16) such that the former can articulate and that the spindle (32) is mounted in a bearing (31) such that it can rotate but cannot be axially displaced, where said bearing is in directly or indirectly turn connected, such that it can rotate, to the pivotable vehicle component and that the pivoting axes of the spindle nut (30) of the bracket section (25) or base plate (16) and of the bearing (31) are parallel to each other.

5. Acceleration sensor as claimed in any one of Claims 1-3, characterised therein that a spindle (40) is screwed into a nut or a thread which is connected directly or indirectly to the pivotable vehicle component, and that the shaft of the free end of the spindle (40) is provided with two retaining discs (42, 43) which are spaced apart and accommodate between them the prongs (45) of a fork structure (46) enclosing the shaft (44) where said fork structure is mounted on the bracket section (25) such that it can pivot about an axis (49) which is parallel to the pivot (27).

6. Acceleration sensor as claimed in any one of Claims 1-3, characterised therein that the worm (60) is mounted directly or indirectly in a bearing on the pivotable vehicle component such that it meshes with a worm wheel segment (65) which has a fixed connection with the bracket section (25) and whose centre line matches the pivot (27) of the bracket section (25).

## Revendications

1. Capteur d'accélération pour systèmes sensibles aux mouvements d'un véhicule, qui est disposé sur une pièce reliée au véhicule, consistant en une pièce de fixation (25) avec une plaque de base (16) qui présente une échancrure en forme de coussinet sphérique et une pièce d'appui pour un levier d'impulsion (12), le levier d'impulsion (12) étant élargi entre sa pointe (11) et son appui sur la pièce d'appui en une calotte (20) en forme de coussinet sphérique, entre celle-ci et l'échancrure en forme de coussinet sphérique, une bille (21) formant une masse d'inertie étant disposée, et en un élément d'actionnement (13) étant en contact ou presque en contact avec la pointe (11) du levier d'impulsion (12), la pièce de fixation (25) étant logée autour d'un axe (27) de manière à pouvoir pivoter sur une pièce de véhicule pivotante, et la pièce de fixation (25) étant pourvue d'un dispositif de réglage qui pivote la pièce de fixation lors du pivotement de la pièce de véhicule de manière à ce que la plaque de base (16) reste dans sa position substantiellement horizontale,
**caractérisé en ce que**
l'axe (27) s'étend à travers la zone de la pointe (11) du levier d'impulsion (12) ou à travers la zone de contact de la pointe du levier d'impulsion avec l'élément d'actionnement (13),
que le dispositif de réglage consiste en un entraînement à broche filetée/écrou (30, 32 ; 40, 41) ou un entraînement à vis sans fin/roue à denture hélicoïdale (60, 65) auquel est raccordé un arbre souple (35 ; 50 ; 63),
et que le mouvement de rotation pour le pivotement peut être transmis par un engrenage relié à un moteur d'entraînement pour la pièce de véhicule pivotante par l'intermédiaire de l'arbre souple (35 ; 50 ; 53).

2. Capteur d'accélération selon la revendication 1, caractérisé en ce que l'axe est formé par l'axe instantané d'un joint universel.

3. Capteur d'accélération selon les revendications 1 ou 2 pour un enrouleur de ceinture, caractérisé en ce qu'ur tourillon (26) qui forme le pivot (27) est fixé à une branche de cadre (3) du cadre en forme de U (1) de l'enrouleur de ceinture.

4. Capteur d'accélération selon l'une quelconque des revendications 1 à 3, caractérisé en ce que l'écrou de la broche (30) est relié par une articulation à la pièce de fixation (25) ou à la plaque de base (16) et que la broche (32) est logée dans un logement (31) de manière à pouvoir tourner, mais sans pouvoir être déplacée dans le sens axial, le logement étant logé à son tour de manière à pouvoir tourner directement ou indirectement sur la pièce de véhicule pivotante, et que les pivots de l'écrou de la broche (30) de la pièce de fixation (25) ou de la plaque de base (16) et de la pièce d'appui (31) sont réciproquement parallèles.

5. Capteur d'accélération selon l'une des revendications 1 à 3, caractérisé en ce que la broche (40) est vissée dans un écrou ou un filet qui est raccordé fermement, directement ou indirectement à la pièce de véhicule pivotante, et que l'arbre de la broche (40) présente en son extrémité libre deux rondelles de fixation (42, 43) espacées qui reçoivent entre elles les branches (45) encadrant l'arbre (44) d'une pièce fourchée (46) qui est logée de manière à pouvoir pivoter sur la pièce de fixation (25) autour d'un axe (49) parallèle au pivot (27).

6. Capteur d'accélération selon l'une quelconque des revendications 1 à 3, caractérisé en ce que la vis sans fin (60) est logée directement ou indirectement sur la pièce de véhicule pivotante, de sorte qu'elle s'engrène avec un segment de la roue à denture hélicoïdale (65) qui est relié fermement à la pièce de fixation (25) et dont l'axe central coïncide avec le pivot (27) de la pièce de fixation (25).
